# EUROPEAN PATENT SPECIFICATION

(11) **EP 2 290 265 B1**
(45) Date of publication and mention of the grant of the patent: **12.09.2012**
(21) Application number: 10013722.3
(22) Date of filing: 04.07.2005
(51) Int. Cl.: F16H 61/662, F16H 63/06, F16H 55/56

(54) **Power unit and staddle-type vehicle provided with the power unit**
Antrieb und Grätschsitz-Fahrzeug, das mit dem Antrieb versehen ist
Unité d'alimentation et véhicule de type à enfourcher avec l'unité d'alimentation

(30) Priority: 08.07.2004 JP 2004202371
(43) Date of publication of application: 02.03.2011
(62) Divisional of application: 09009177.8
(73) Proprietor: Yamaha Hatsudoki Kabushiki Kaisha, Shizuoka-ken 438-8501 (JP)
(72) Inventor: Sugitani, Tsuyoshi, Iwat-shi Shizuoka-ken 438-8501 (JP); Takebe, Mitsukazu, Iwat-shi Shizuoka-ken 438-8501 (JP); Fujii, Isao, Iwat-shi Shizuoka-ken 438-8501 (JP); Hayashi, Junji, Iwat-shi Shizuoka-ken 438-8501 (JP); Aoyama, Atsushi, Iwat-shi Shizuoka-ken 438-8501 (JP)
(74) Representative: Grünecker, Kinkeldey, Stockmair & Schwanhäusser

(56) References cited:
- EP-A- 0 558 752
- EP-A- 0 755 819
- EP-A- 1 420 195
- DE-A1- 19 946 193

## Description

The present invention relates to a power unit for a small vehicle according to the preamble of independent claim 1. Such a power unit for a small vehicle can be taken from EP 0 558 752 A1.

For example, scooter type motorcycles generally mount thereon a unit swing type power unit, in which an engine body and a transmission casing with a continuously variable transmission accommodated therein are joined integrally.

For example, Patent Document 1 proposes, as a power unit of this kind, one, in which a sheave drive member, which drives a primary sheave to vary a belt wound diameter, and a starting drive member, which rotationally drives a crankshaft to start an engine, are arranged on one side of a crank chamber and a common electric motor drives the sheave drive member and the starting drive member. Patent Document 1: JP4210156A

By the way, the conventional power unit adopts a construction, in which both the sheave drive member and the starting drive member are arranged together on one side of the crank chamber. Therefore, the primary sheave and the secondary sheave project outside to cause a problem that a whole vehicle is correspondingly increased in vehicle width dimension and left and right weight unbalance is liable to occur.

It is the object of the present invention to provide a power unit as indicated above, in which an increase of a whole vehicle in vehicle width dimension can be suppressed and which can be made favorable in left and right weight balance.
According to the present invention said object is solved by a power unit for a small vehicle having the features of independent claim 1. Preferred embodiments are laid down in the dependent claims.

### Brief Description of the Drawings

[Fig. 1] Fig. 1 is a side view showing a scooter type motorcycle, on which a power unit for small-sized vehicles, according to a first embodiment, is mounted. Said embodiment does not illustrate the subject matter of the invention in view of the entire combination of the features of the independent claim.
[Fig. 2] Fig. 2 is a side view showing a power unit connected to a vehicle body frame of the motorcycle shown in Fig. 1 to be able to swing.
[Fig. 3] Fig. 3 is a view (plan view) as viewed along an arrow A in Fig. 2.
[Fig. 4] Fig. 4 is an enlarged view showing the power unit shown in Fig. 2.
[Fig. 5] Fig. 5 is a side view showing an arrangement of respective sheaves of a V-belt type continuously variable transmission mounted on the power unit shown in Fig. 4.
[Fig. 6] Fig. 6 is a cross sectional view taken along the line B-B in Fig. 5.
[Fig. 7] Fig. 7 is a cross sectional view taken along the line C-C in Fig. 5.
[Fig. 8] Fig. 8 is an enlarged view showing a periphery of an electric motor shown in Fig. 3.
[Fig. 9] Fig. 9 is a side view showing a scooter type motorcycle provided with a power unit according to a second embodiment which illustrates the subject matter of the invention.
[Fig. 10] Fig. 10 is a plan view showing, in partial section, the power unit.
[Fig. 11] Fig. 11 is a side view showing a state, in which a case cover of the power unit is removed.
[Fig. 12] Fig. 12 is a right side view showing an engine body of the power unit.
[Fig. 13] Fig. 13 is a cross sectional view showing a continuously variable transmission mechanism of the power unit.
[Fig. 14] Fig. 14 is a cross sectional view showing a starter motor part of the power unit.
[Fig. 15] Fig. 15 is a cross sectional view showing a primary balancer and an oil pump drive part of the power unit.
[Fig. 16] Fig. 16 is a cross sectional view showing an oil reservoir of the power unit.

### Description of Reference Numerals and Signs

- 1:: primary shaft (drive side shaft)
- 2:: secondary shaft (driven side shaft)
- 3:: primary sheave (drive side sheave)
- 4:: secondary sheave (driven side sheave)
- 5:: belt
- 10:: electric motor (ECVT motor)
- 100:: transmission casing
- 101:: transmission casing
- 106:: crankcase
- 110:: V-belt type continuously variable transmission
- 401:: motorcycle
- 410:: power unit
- 450:: pivot shaft
- 460:: vehicle body frame
- 601:: starter motor
- 611:: balancer shaft
- 801:: scooter type motorcycle
- 810:: power unit
- 814:: drive side sheave
- 814a:: drive side shaft
- 815:: driven side sheave
- 815a:: driven side shaft
- 816:: V-belt
- 817:: continuously variable transmission mechanism
- 818:: transmission casing
- 820:: engine body
- 821:: crankshaft
- 822:: crankcase
- 823:: cylinder block (cylinder body)
- 835:: primary balancer
- 837: drive gear (balancer, oil pump drive member):
- 840:: oil pump
- 848:: starter gear (starting drive member)
- 850:: starter motor
- 866:: reciprocating gear (drive member)
- 865:: ECVT motor
- A:: straight line
- B:: cylinder axis
- C, D:: virtual plane

A power unit for small-sized vehicles, according to a first embodiment, will be described in detail below with reference to the drawings. Said embodiment does not illustrate the subject matter of the invention in view of the entire combination of the features of the independent claim.

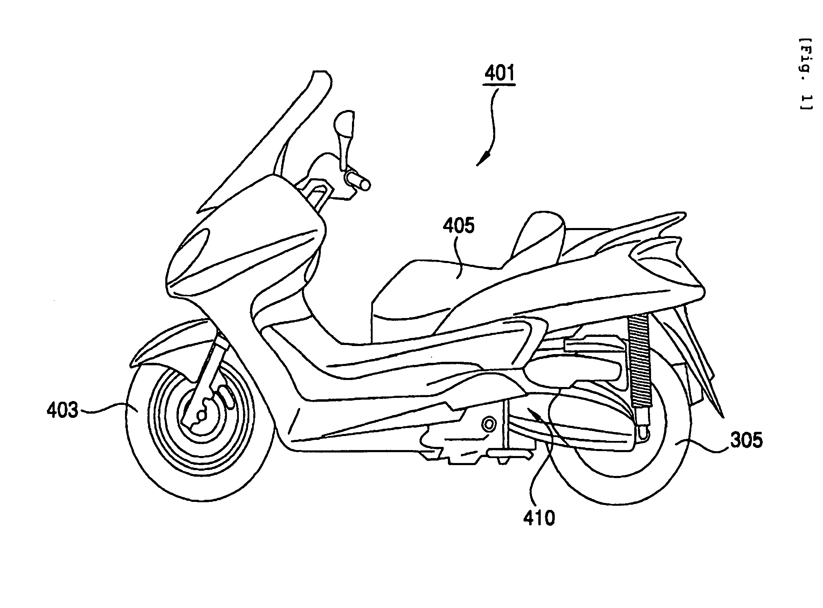

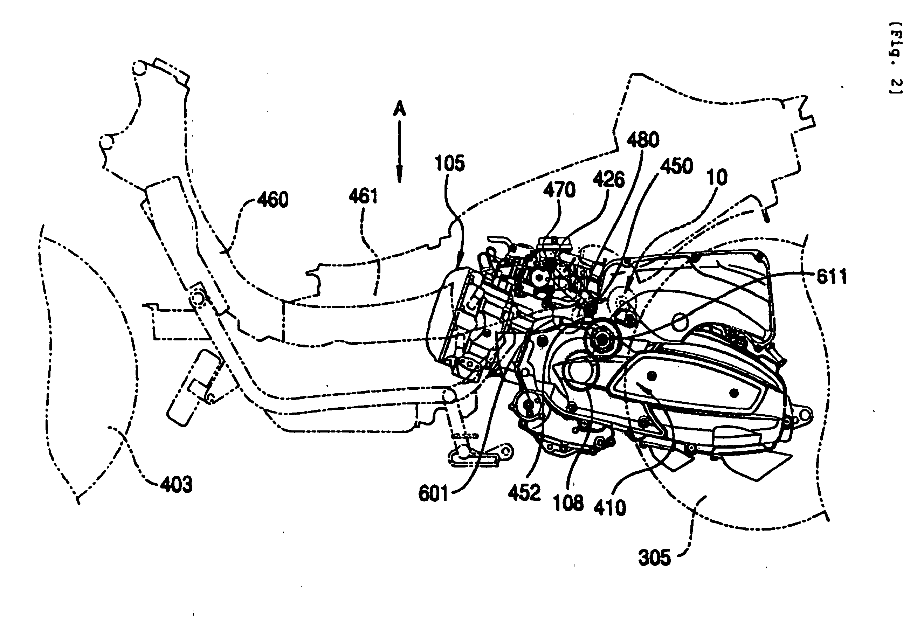

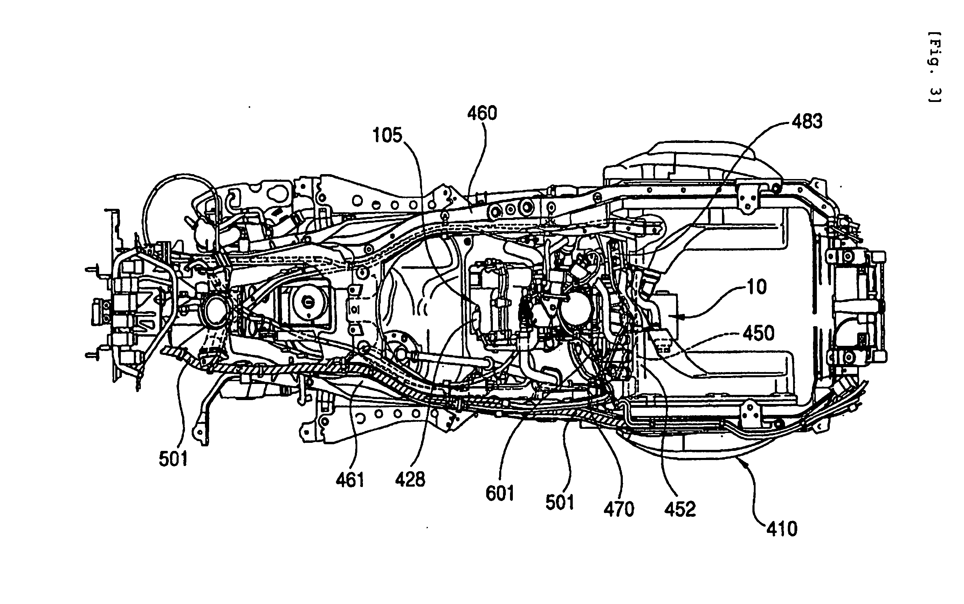

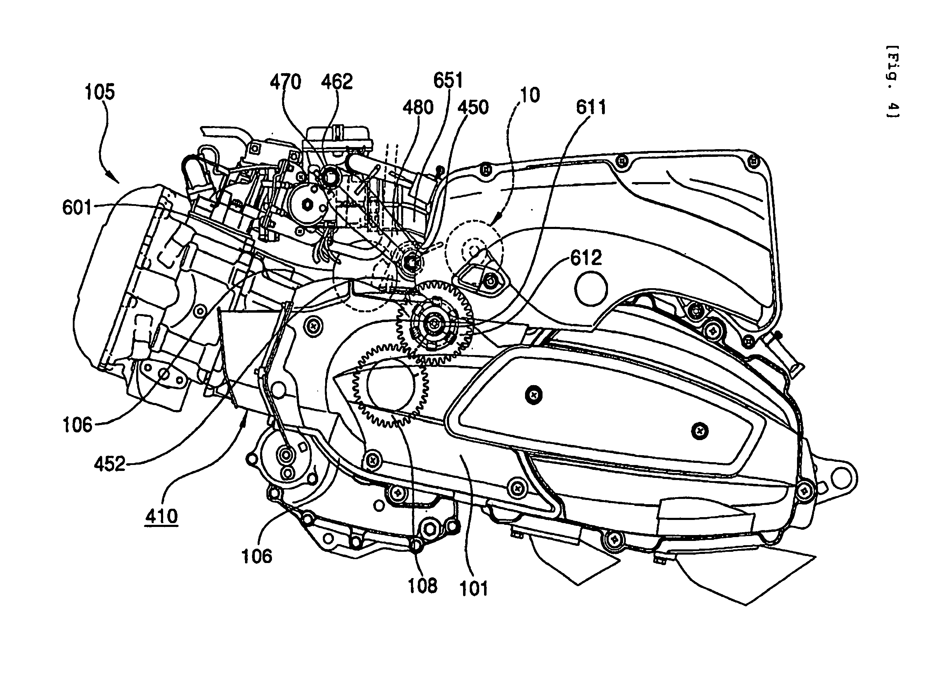

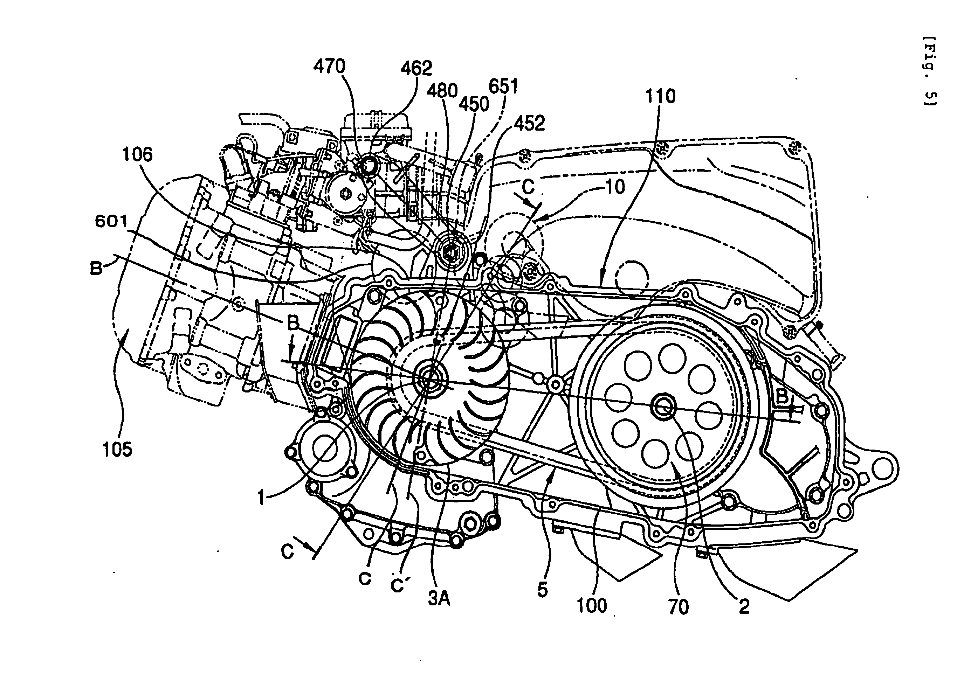

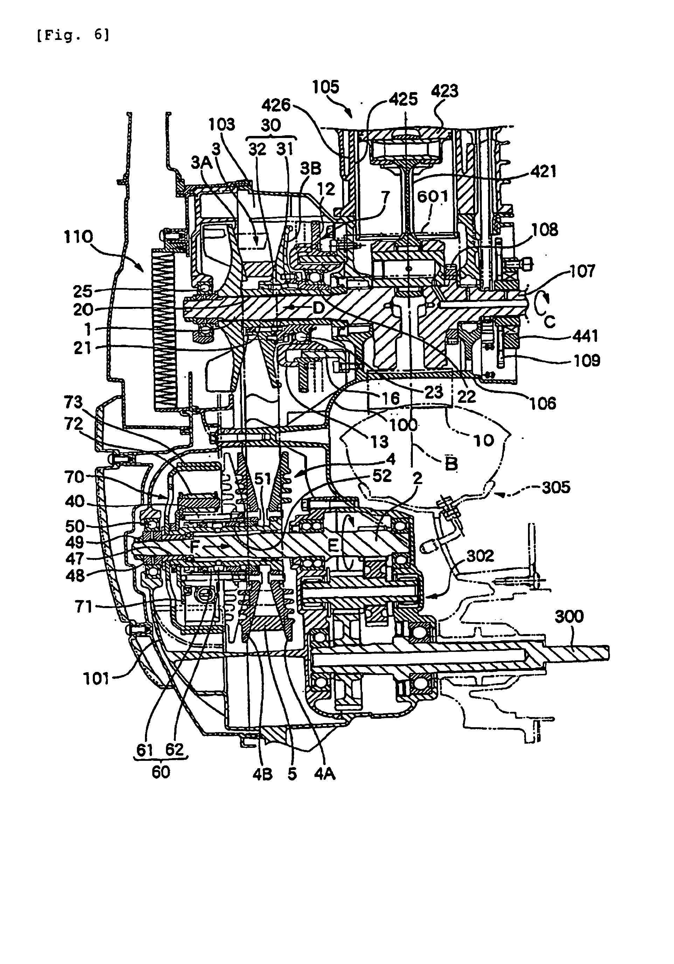

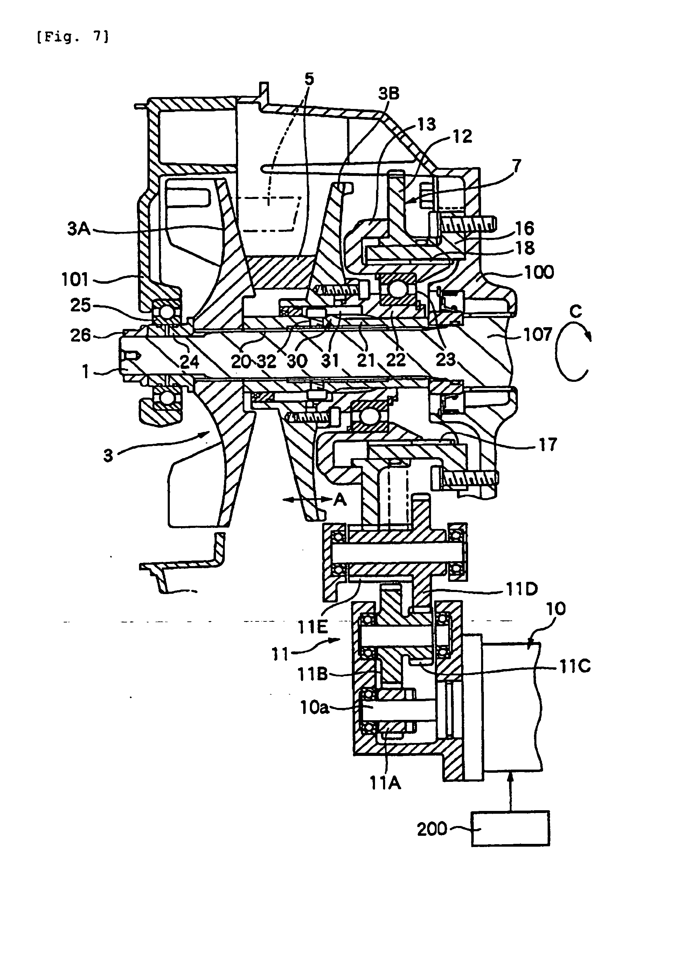

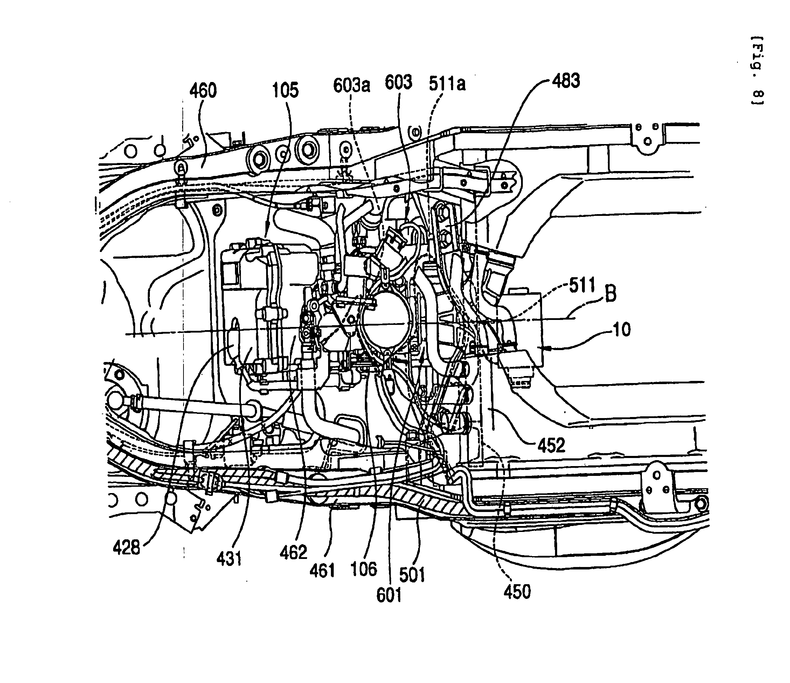

Fig. 1 is a side view showing an embodiment of a scooter type motorcycle, on which a power unit for small-sized vehicles, according to the invention, is mounted, Fig. 2 is a side view showing a power unit connected to a vehicle body frame of the motorcycle shown in Fig. 1 to be able to swing, Fig. 3 is a view (plan view) as viewed along an arrow A in Fig. 2, Fig. 4 is an enlarged view showing the power unit shown in Fig. 2, Fig. 5 is a side view showing an arrangement of respective sheaves of a V-belt type continuously variable transmission mounted on the power unit shown in Fig. 4, Fig. 6 is a cross sectional view taken along the line B-B in Fig. 5, Fig. 7 is a cross sectional view taken along the line C-C in Fig. 5, and Fig. 8 is an enlarged view showing a periphery of an electric motor shown in Fig. 3.

In a motorcycle 401 shown in Fig. 1, a power unit 410 is arranged in a position below a seat 405 between a front wheel 403 and a rear wheel 305, which is a drive wheel. Major halves of a front and both sides of a vehicle are covered by a cowl.

The power unit 410 shown herein comprises, as shown in Figs. 4 to 6, an engine 105, transmission casings 100, 101 extending rearward from a crankcase 106 of the engine 105, and a V-belt type continuously variable transmission 110 accommodated in a space (accommodating part) defined by the transmission casings 100, 101 and the crankcase 106 to change output of the engine 105 in speed, and transmits output of the continuously variable transmission 110 to an axle shaft 300 of the rear wheel 305, which is arranged rearwardly of the engine 105 to make a drive wheel, through an automatic centrifugal clutch 70 and a speed reducer 302, which comprises a gear train.
The engine 105 comprises the crankcase 106 being a casing to support a crankshaft 107 rotatably, a piston 423 connected to the crankshaft 107 through a connecting rod 421, a cylinder block 426 joined to an upper portion of the crankcase 106 to provide cylinder parts (combustion chamber) 425, on which the piston 423 slides, and a cylinder head 431 joined to an upper portion of the cylinder block 426 with intake and exhaust ports and an ignition plug 428 mounted to respective cylinder parts 425.

With the engine 105 in the embodiment, the crankshaft 107 is mounted with an axis thereof directed in a vehicle width direction.

A fly wheel 441 is mounted to a right end of the crankshaft 107 and a generator is mounted to the fly wheel 441. The generator produces electricity upon rotation of the crankshaft 107 to supply electricity to electric parts mounted on a vehicle and to charge a vehicle-mounted battery with electricity.

A primary shaft 101, which makes an input shaft of the V-belt type continuously variable transmission 110 according to the invention, is formed integral with a left end of the crankshaft 107. The transmission casings 100, 101 are mounted to a left side of the crankcase 106 to define an accommodating part 103 being a space, which accommodates the V-belt type continuously variable transmission 110.

As shown in Figs. 2 and 4, the crankcase 106, to which the transmission casings 100, 101 are mounted, is provided on an upper, outer peripheral surface thereof with a turning support 452, through which a pivot shaft 450 extends in the vehicle width direction.

Also, a suspension support 462, through which a pivot shaft 470 extends in the vehicle width direction, is provided on a vehicle body frame 460 of the motorcycle 401.

The pivot shaft 450 and the pivot shaft 470 are connected to each other by a link 480. Accordingly, the power unit 410 according to the embodiment is connected to the vehicle body frame 460 through the link 480 and born by the vehicle body frame 460 to be able to swing about the pivot shaft 450 as a center of rotation.

The V-belt type continuously variable transmission 110 comprises a primary shaft (drive side shaft) 1 formed integral with the crankshaft 107, which is an output shaft of the engine 105 being a power source, a secondary shaft (driven side shaft) 2 arranged in parallel to the primary shaft 1 to take out therefrom output to the drive wheel 305, a primary sheave 3 and a secondary sheave 4, respectively, arranged on the primary shaft 1 and the secondary shaft 2 to comprise stationary flanges 3A, 4A and moving flanges 3B, 4B, which define therebetween V-grooves to train a belt therearound, and to move the moving flanges 3B, 4B in an axial direction (a left and right direction in Fig. 6) to vary the V-grooves in groove width, a V-belt 5 trained around the V-grooves of the primary sheave 3 and the secondary sheave 4 to transmit a rotational motive power between the both sheaves 3, 4, and a groove width regulating mechanism 7, which uses an electric motor (ECVT motor) 10 to move the moving flanges 3B, 4B through a reciprocating gear (drive member) 12 described later to regulate the groove widths of the primary sheave 3 and the secondary sheave 4, and the groove widths of the primary sheave 3 and the secondary sheave 4 are varied by the groove width regulating mechanism 7 to regulate diameters, at which the V-belt 5 is trained around the respective sheaves 3, 4 to adjust a speed change ratio between the primary sheave 3 and the secondary sheave 4 steplessly.

According to the embodiment, as shown in Fig. 4, the electric motor 10 of the groove width regulating mechanism 7 is arranged rearwardly of the turning support 452 on an outer peripheral surface upper portion of the crankcase 106 to make a connection to the vehicle body frame 460, and a starter motor 601 is arranged forwardly of the turning support 452 to start the engine 105, the electric motor 10 and the starter motor 601 being arranged alternately to be aligned substantially horizontally in the vicinity before and after the turning support 452 and with axes thereof directed in the vehicle width direction.

The starter motor 601 transmits rotation through a gear train (depiction of which is omitted) to a starter driven gear (starting drive member) 109 fixed to the crankshaft 107.

While the electric motor 10 used in the groove width regulating mechanism 7 is required to enable normal rotation and reverse rotation for increase and decrease in groove width, the starter motor 601 is used only in normal rotation. Here, when a single reversible motor serves as use for the groove width regulating mechanism and for starting, the starter motor is used in reverse rotation, so that it is preferable to mount respective exclusive motors in order to ensure reliability of the starter motor in operation.

Here, as shown in Fig. 6, as viewed in a direction perpendicular to an axis of the crankshaft 107 and a cylinder axis B, that is, as viewed in plan view, the starter driven gear 109 and the reciprocating gear 12, respectively, are arranged on the right and on the left with the cylinder axis B therebetween, and the electric motor 10 and the starter motor 601 are arranged on the cylinder axis B. Also, the starter motor 601 and the electric motor 10 are arranged on a front side and on a rear side with the axis of the crankshaft 107 therebetween.

Also, as viewed in a direction along the crankshaft 107, the electric motor 10 and the starter motor 601, respectively, are arranged on the rear side and on the front side with a virtual plane C, which includes the axis of the crankshaft 107 and is perpendicular to the cylinder axis B, therebetween. Furthermore, the electric motor 10 and the starter motor 601, respectively, are arranged on the rear side and on the front side of a virtual plane C', which includes both the crankshaft 107 and the pivot shaft 450.

The electric motor 10 and the starter motor 601 are mounted to an upper, outer peripheral surface of the crankcase 106 so as to make upper ends thereof agree substantially with each other, and an intake duct 651, to which an air cleaner is connected, extends above the electric motor 10 and the starter motor 601.

Further, according to the embodiment, a balancer shaft 611 is arranged in the vicinity of the turning support 452 in the crankcase as shown in Fig. 4.

A gear 612 arranged on the balancer shaft meshes with a gear 108, which is assembled to the crankshaft 107, to be driven upon rotation of the crankshaft 107 to rotate reversely whereby the balancer shaft 611 applies a predetermined rotational load (counter weight) on the crankshaft 107 to cancel oscillation of the crankshaft 107 to stabilize engine rotation and thus is considerable in weight.

A main wire harness 501, which supplies electricity to various vehicle-mounted electric parts, is laid vertically along an upper frame 461 on a left side of the vehicle body frame 460 as shown in Figs. 3 and 8.

As indicated by a thick line shown in Fig. 8, a feed cable 511, which feeds electricity to the electric motor 10, branches from the main wire harness 501 in the vicinity of a position, in which the turning support 452 permitting the pivot shaft 450 to pass therethrough is mounted, and forms a curved portion 511a slacking around a link reinforcement frame 483, which extends in the vehicle width direction to reinforce a link 480, to be then connected to the electric motor 10 arranged just in the rear of the turning support 452.

Also, as shown in Fig. 8, a feed cable 603, which feeds electricity to the starter motor 601, branches from the main wire harness 501 in the vicinity of a position, in which the turning support 452 permitting the pivot shaft 450 to pass therethrough is mounted, and forms a curved portion 603a slacking around the link reinforcement frame 483, which extends in the vehicle width direction to reinforce the link 480, to be then connected to the starter motor 601 arranged just in front of the turning support 452.

Subsequently, referring to Figs. 6 and 7, an explanation will be given to respective constructions and operations of the V-belt type continuously variable transmission 110, the automatic centrifugal clutch 70, and the speed reducer 302, which make constituents of the power unit 410.

The continuously variable transmission 110 according to the embodiment comprises, as the groove width regulating mechanism 7, the electric motor 10 (see Figs. 7 and 8) being means that gives an optional moving thrust to the moving flange 3B of the primary sheave 3, a primary side actuating mechanism (so-called torque cam) 30 provided between the moving flange 3B and the primary shaft 1 to give a moving thrust to the moving flange 3B in a direction, in which a difference in torque is cancelled, when a torque difference in rotational torque is generated between the primary shaft 1 and the moving flange 3B, a compression coil spring 40 being means that gives a thrust to the moving flange 4B of the secondary sheave 4 in a direction, in which a groove width is decreased, and a secondary side actuating mechanism (so-called torque cam) 60 provided between the moving flange 4B and the secondary shaft 2 to give a moving thrust to the moving flange 4B in a direction, in which a difference in torque is cancelled, when a torque difference in rotational torque is generated between the secondary shaft 2 and the moving flange 4B.

In addition, in Fig. 6, arrows C, E indicate directions, in which the primary shaft 1 and the secondary shaft 2 rotate. Also, an arrow D indicates a direction of that thrust, which is generated on the moving flange 3B by the primary side actuating mechanism 30, and an arrow F indicates a direction of that thrust, which is generated on the moving flange 4B by the secondary side actuating mechanism 60.

The continuously variable transmission 110 according to the embodiment is accommodated in the transmission casings 100, 101 adjacent to the crankcase 106 of the engine 105, and the primary shaft 1 is provided integrally on the crankshaft 107 of the engine 105.

The secondary shaft 2 is connected to the axle shaft 300 through the speed reducer 302 and the drive wheel 305 is mounted to the axle shaft 300. The primary sheave 3 is arranged on an outer periphery of the primary shaft 1 and the secondary sheave 4 is mounted to an outer periphery of the secondary shaft 2 with the automatic centrifugal clutch 70 therebetween.

As shown in Fig. 7, the primary sheave 3 comprises the stationary flange 3A fixed to one end of the primary shaft 1 and the moving flange 3B movable in an axial direction (direction of an arrow A in the figure) of the primary shaft 1, and a V-groove, around which the V-belt 5 is trained, is formed between opposite conical surfaces of the stationary flange 3A and the moving flange 3B.

One end of the primary shaft 1 is supported on the casing 101 with a bearing 25 therebetween, and a sleeve 24 with the bearing 25 fitted thereon and a sleeve 21 described later are fixed together by a lock nut 26 whereby a boss of the stationary flange 3A is fixed so as not to move axially.

The moving flange 3B comprises a cylindrical-shaped boss, through which the primary shaft 1 extends, and a cylindrical-shaped slider 22 is fixed to one end of the boss. The sleeve 21 is interposed between the slider 22 and the primary shaft 1, the sleeve 21 being fitted onto an outer periphery of the primary shaft 1 with a spline 20 therebetween to rotate together with the primary shaft 1.

The slider 22 is mounted to an outer periphery of the sleeve 21 to be movable axially.

The slider 22 is formed with a cam groove 31, which extends obliquely in an axial direction, and a guide pin 32 provided protrusively on the outer periphery of the sleeve 21 is inserted slidably into the cam groove 31. Thereby, the moving flange 3B made integral with the slider 22 is movable axially of the primary shaft 1 while rotating with the primary shaft 1.

The cam groove 31 and the guide pin 32 constitute the primary side actuating mechanism 30 described above. Accordingly, inclination of the cam groove 31 is set to be oriented in a direction (for example, in a direction, in which a moving thrust in a direction (direction of the arrow D) for a decrease in groove width of the primary sheave 3 is given to the moving flange 3B when the primary shaft 1 is larger in rotational torque than the moving flange 3B), in which a moving thrust in a direction for cancellation of a difference in torque is given to the moving flange 3B of the primary sheave 3 when a torque difference in rotational torque is generated between the primary shaft 1 and the moving flange 3B. A path of the cam groove 31 including an angle of inclination can be set optionally in the form of a straight line, a curved line, etc. according to a given performance, and working thereof is also easy.

On the other hand, a cylindrical-shaped feed guide 16 projecting toward the moving flange 3B is screwed to an inner side of the casing 100 opposed to the moving flange 3B. The feed guide 16 is provided coaxially on the primary shaft 1 and female threads 17 are formed on an inner peripheral surface of the feed guide 16. Also, the reciprocating gear (drive member) 12 is fitted onto an outer periphery of the feed guide 16 to be slidable axially and circumferentially.

The reciprocating gear 12 is joined to an end of an outer peripheral wall of an annular rotating ring 13 curved in U-shaped cross section from an inner peripheral wall toward the outer peripheral wall, and male threads 18 formed on an outer peripheral surface of the inner peripheral wall are threaded into the female threads 17 of the feed guide 16. Also, the inner peripheral wall of the rotating ring 13 is joined to the slider 22, which is made integral with the moving flange 3B through a bearing 23.

With such construction, when the reciprocating gear 12 rotates, the reciprocating gear 12 and the rotating ring 13 move axially due to the lead action of the female threads 17 and the male threads 18 whereby the moving flange 3B made integral with the slider 22 moves and so the primary sheave 3 is varied in groove width. In addition, trapezoidal threads are used for the male threads 18 and the female threads 17.

The electric motor 10, which optionally moves the moving flange 3B of the primary sheave 3, is arranged in the vicinity of a rear portion of the turning support 452 on the upper, outer peripheral surface of the crankcase 106 as described above, and a motor output shaft 10a and the reciprocating gear 12 are connected to each other through a gear transmission mechanism 11, in which multi-stage spur gears 11A to 11E are combined.

The moving flange 3B can be moved axially through the reciprocating gear 12 by controlling rotation of the electric motor 10 with a control unit 200 (see Fig. 7).

Also, the secondary sheave 4 comprises, as shown in Fig. 6, the stationary flange 4A connected to the secondary shaft 2 with the centrifugal clutch 70 therebetween, and the moving flange 4B movable axially (direction of the arrow B in the figure) of the secondary shaft 2, and a V-groove, around which the V-belt 5 is trained, is formed between opposite conical surfaces of the stationary flange 4A and the moving flange 4B.

The stationary flange 4A comprises a cylindrical-shaped guide 51, the guide 51 being supported rotatably on the outer periphery of the secondary shaft 2 with a bearing therebetween. The centrifugal clutch 70 interposed between the stationary flange 4A and the secondary shaft 2 comprises a centrifugal plate 71, which rotates together with the guide 51 of the stationary flange 4A, a centrifugal weight 72 supported on the centrifugal plate 71, and a clutch housing 73, with which the centrifugal weight 72 contacts to come close thereto and away therefrom.

Here, the centrifugal plate 71 is spline-fittingly joined to the guide 51 of the stationary flange 4A to be able to rotate together therewith. Also, the clutch housing 73 is fixed through a boss member 47 spline-fitted onto an end of the secondary shaft 2. In addition, the end of the secondary shaft 2 is supported on the casing 101 with a bearing 50 therebetween, and a sleeve 48, onto which the bearing 50 is fitted, is fixed by a lock screw 49 whereby the clutch housing 73 and the boss member 47 are fixed so as not to move axially.

With such construction, when the rotational frequency of the centrifugal plate 71, which rotate together with the stationary flange 4A, reaches a predetermined value, the centrifugal weight 72 is moved outward due to a centrifugal force to come into contact with the clutch housing 73, so that rotation of the stationary flange 4A is transmitted to the secondary shaft 2.

The moving flange 4B is made integral with a cylindrical-shaped slider 52, which is supported on an outer periphery of the guide 51 of the stationary flange 4A to be movable axially, and biased by the compression coil spring 40 in a direction, in which the V-groove is decreased in groove width. The compression coil spring 40 is mounted in a compressed state with one end thereof abutting against a projection on an outer periphery of the slider 52 and the other end thereof abutting against a spring receiver of the centrifugal plate 71.

A cam groove 61 inclined relative to an axis is formed on the slider 52 made integral with the moving flange 4B, and a guide pin 62 provided protrusively on the outer periphery of the guide 51, which is made integral with the stationary flange 4A, is inserted slidably into the cam groove 61. Thereby, the moving flange 4B made integral with the slider 52 is made movable axially of the secondary shaft 2 while rotating with the secondary shaft 2.

The cam groove 61 and the guide pin 62 constitute the secondary side actuating mechanism 60 described above. Accordingly, inclination of the cam groove 61 is set to be oriented in a direction (for example, in a direction, in which a moving thrust in a direction (an arrow F) for a decrease in groove width of the secondary sheave 4 is given to the moving flange 4B when the secondary shaft 2 is smaller in rotational torque than the moving flange 4B), in which a moving thrust in a direction for cancellation of a difference in torque is given to the moving flange 4B when a torque difference in rotational torque is generated between the secondary shaft 2 and the moving flange 4B. A path of the cam groove 61 including an angle of inclination can be set optionally in the form of a straight line, a curved line, etc. according to a given performance and working thereof is also easy.

Owing to the provision of the secondary side actuating mechanism 60, the stationary flange 4A joined to the secondary shaft 2 becomes slow in rotational frequency as when, for example, a motorcycle comes to an upward hill and a difference in speed is generated between it and the moving flange 4B keeping rotation by the V-belt 5, the guide pin 62 apparently pushes the cam groove 61 in a direction of the arrow F, so that the moving flange 4B is pushed through the slider 52 in a direction toward the stationary flange 4A and the V-groove is forcedly decreased in groove width.

Subsequently, an explanation will be given to an operation of the V-belt type continuously variable transmission 110 of a motorcycle according to the embodiment.

When the control unit 200 inputs a speed change signal into the electric motor 10, the reciprocating gear 12 and the rotating ring 13 are rotated upon rotation of the electric motor 10 and the slider 22 fixed to the rotating ring 13 through the bearing 23 moves axially due to the lead action of the male threads 18 and the female threads 17, so that the moving flange 3B made integral with the slider 22 moves and so the primary sheave 3 is varied in groove width.

For example, in the case where the primary sheave 3 is decreased in groove width, a diameter, at which the V-belt 5 is trained, is increased and a speed change ratio shifts toward Top. Also, in the case where the primary sheave 3 is increased in groove width, a diameter, at which the V-belt 5 is trained, is decreased and a speed change ratio shifts toward Low.

On the other hand, the secondary sheave 4 is changed in groove width in opposition to the primary sheave 3 as the primary sheave 3 is changed in groove width.

That is, when a diameter, at which the V-belt 5 is trained around the primary sheave 3, is decreased (shifts toward Low), a force, with which the V-belt 5 bites, is decreased on a side of the secondary sheave 4, so that slip is generated between the moving flange 4B and the V-belt and a difference in speed is generated between the moving flange 4B and the stationary flange 4A. Then, the moving flange 4B is pushed toward the stationary flange 4A due to the action of the cam groove 61 and the bias of the compression coil spring 40, so that the secondary sheave 4 is decreased in groove width and a diameter, at which the V-belt 5 is trained, is increased.

Consequently, a speed change ratio between the primary sheave 3 and the secondary sheave 4 is increased and torque transmitted to the drive wheel 305 is increased. Conversely, when a diameter, at which the V-belt 5 is trained around the primary sheave 3, is increased (shifts toward Top), the V-belt 5 bites into the V-groove on a side of the secondary sheave 4, so that the moving flange 4B moves against the bias of the compression coil spring 40 in a direction away from the stationary flange 4A. Therefore, the secondary sheave 4 is increased in groove width and a diameter, at which the V-belt 5 is trained, is increased, so that a speed change ratio between the primary sheave 3 and the secondary sheave 4 is decreased.

When the rotational frequency of the secondary sheave 4 reaches a predetermined value, the secondary sheave 4 is joined to the secondary shaft 2 with the centrifugal clutch 70 therebetween and rotation of the secondary shaft 2 is transmitted to the axle shaft 300 through a gear train of the speed reducer 302.

Since the V-belt type continuously variable transmission 110 combined with the engine 105 is constructed such that the electric motor 10 regulates the respective sheaves 3, 4 in groove width, the power unit 410 for small-sized vehicles, described above, controls the operation of the electric motor 10 according to an operation condition and a running state of a vehicle to enable exercising speed change ratio control according to an operation condition and a running state of a vehicle.

Also, the electric motor 10 of the groove width regulating mechanism 7 is arranged on the upper, outer peripheral surface of the crankcase 106 of the engine 105 and heat generated in the power unit 410 is not directly radiated, so that temperature rise is hard to generate due to the influence of heat generated in the power unit 410.

Besides, the electric motor 10 is arranged rearwardly of the turning support 452 on the upper, outer peripheral surface of the crankcase 106 as shown in Fig. 2 and rotation of the drive wheel 305 arranged rearwardly thereof takes in a surrounding wind to generate the action of blasting around the electric motor 10, so that a cooling effect due to blasting can be expected and a heat-resisting performance required of the electric motor 10 of the groove width regulating mechanism 7 is suppressed to enable achieving reduction in cost.

Also, since the electric motor 10 of the groove width regulating mechanism 7 is arranged on the upper, outer peripheral surface of the crankcase 106 and can be readily put in an exposed state only by opening a vehicle body cover, sheet, etc. which cover, for example, an upper portion of the power unit 410, as compared with a conventional power unit, in which an electric motor is arranged in a casing of a power unit, inspection and maintenance of the electric motor 10 can be readily performed to provide for an excellent quality of maintenance.

Also, since the electric motor 10 of the groove width regulating mechanism 7 is arranged on the upper, outer peripheral surface of the crankcase 106, there is no need of consideration or the like to avoid interference with moving parts such as a gear train for power transmission when electric wiring is laid for the electric motor 10, so that laying arrangement of electric wiring for the electric motor 10 is facilitated.

Also, since the electric motor 10 of the groove width regulating mechanism 7 and the starter motor 601 of the engine 105, which are large in weight, are aligned before and after and in the vicinity of the turning support 452 as a turning point, balance in weight can be achieved by gathering heavy item in the vicinity of the turning point. Accordingly, the electric motor 10 of the V-belt type continuously variable transmission 110 does not make a factor to cause unbalance of a vehicle in weight, so that it is possible to improve a vehicle in balance of weight, thus enabling improving the operability.

Also, since the electric motor 10 of the groove width regulating mechanism 7 and the starter motor 601 of the engine 105, respectively, are arranged in the vicinity of the turning support 452 as a turning point, relative movements and vibrating widths of the respective motors 10, 601 relative to the turning point can be restricted to small extents for the swinging motion of the power unit 410 about the pivot shaft during the running of a vehicle.

Accordingly, it is possible to restrict inertial forces of the respective motors when the power unit 410 swings, and it is possible to correspondingly lessen stress loading acting around the turning point. Corresponding to an amount, by which stress loading acting is lessened when the power unit 410 swings, it becomes possible to restrict the mechanical strength ensured for a connection of the power unit 410 and the vehicle body frame 460 and for the casing (mainly, the crankcase 106) of the power unit 410 to achieve lightening of the power unit 410 and the vehicle 401.

Also, since the electric motor 10 of the groove width regulating mechanism 7 and the starter motor 601, respectively, are arranged in the vicinity of the turning support 452 as a turning point, slacking of electric wiring for the respective motors 10, 601 is suppressed to enable neatly gathering electric wiring for the respective motors 10, 601, thus enabling making the wire harness 501 small in size and simple and improving the respective motors 10, 601 in anti-vibrating quality.

Further, according to the embodiment, the balancer shaft 611 being a heavy part arranged in the crankcase 106 is arranged in the vicinity of the turning support 452 whereby heavy parts arranged around the turning point are increased and gathered around the turning point, so that it becomes further ready to regulate balance of a vehicle in weight and lessening of inertial forces generated by heavy parts when the power unit 410 swings is promoted, thus enabling further lightening of a vehicle or the like.

Also, in that configuration, in which the electric motor 10 of the groove width regulating mechanism 7 is arranged on the upper, outer peripheral surface of the crankcase 106, the electric motor 10 does not obstruct shortening of a center distance between the primary shaft 1 and the secondary shaft 2 and is suited to making the V-belt type continuously variable transmission 110 compact in the case where there is generated a need of decreasing a center distance between the primary shaft 1 and the secondary shaft 2 for the purpose of making the V-belt type continuously variable transmission 110 compact.

Also, according to the embodiment, with that construction, in which the electric motor 10 and the starter motor 601 are arranged before and after and in the vicinity of the turning support 452 and the intake duct 651 is extended thereabove, the electric motor 10 and the starter motor 601 are made uniform in height, so that the intake duct 651 can be configured to pass substantially straight and an intake system of high performance with less line resistance or the like becomes easy to construct.

In addition, according to the embodiment, the electric motor 10 for the groove width regulating mechanism 7 is arranged rearward in the vicinity of the turning support 452 and the starter motor 601 is arranged forward in the vicinity of the turning support 452 but in terms of weight balance or the like the same function and effect can be produced also when the electric motor 10 is arranged forward in the vicinity of the turning support 452 and the starter motor 601 is arranged rearward in the vicinity thereof.

Also, while the embodiment has been described with respect to the power unit 410 for motorcycles, the power unit 410 is not limited to motorcycles but can be of course applied to tricycles, four-wheel buggies, etc., which are relatively small-sized vehicles.

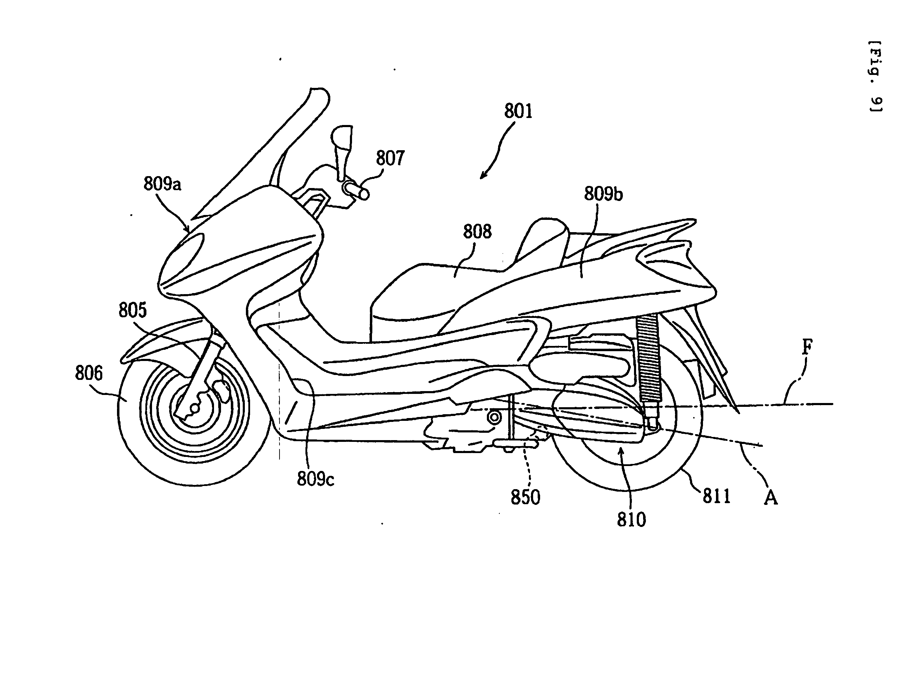

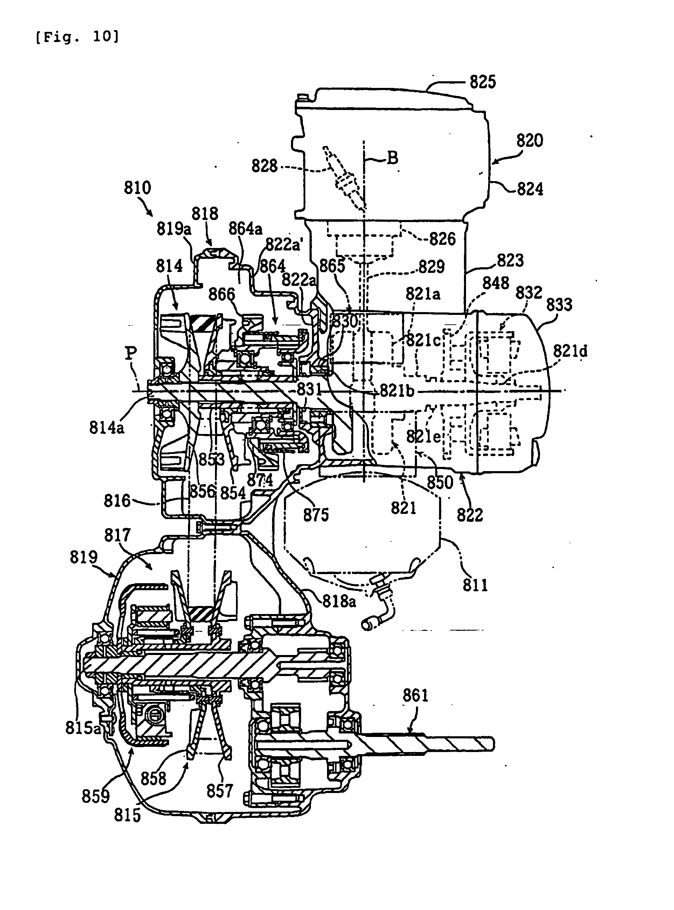

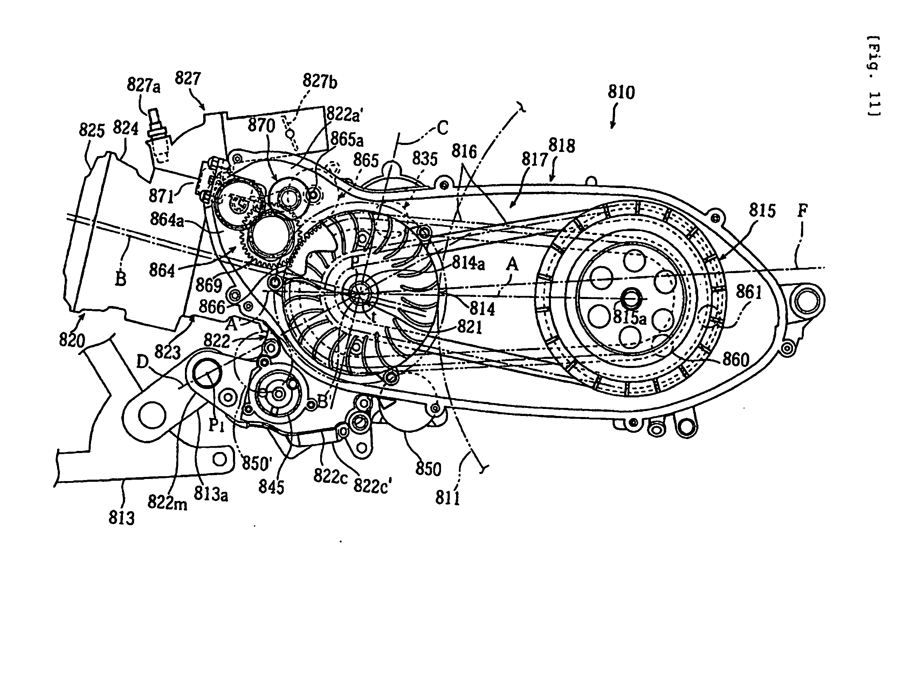

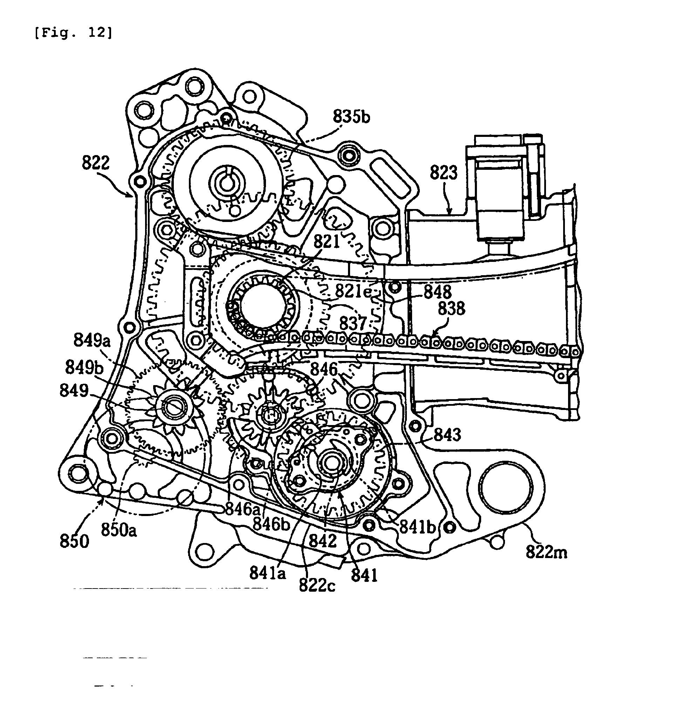

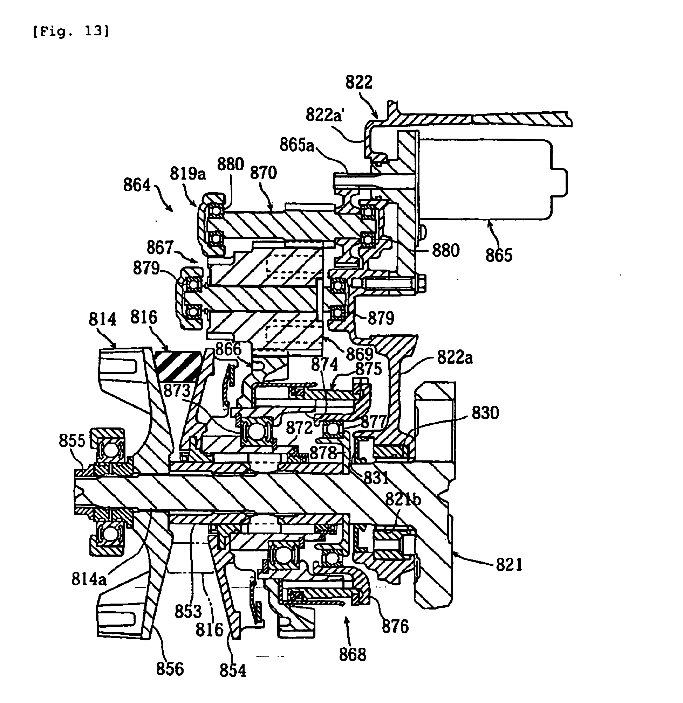

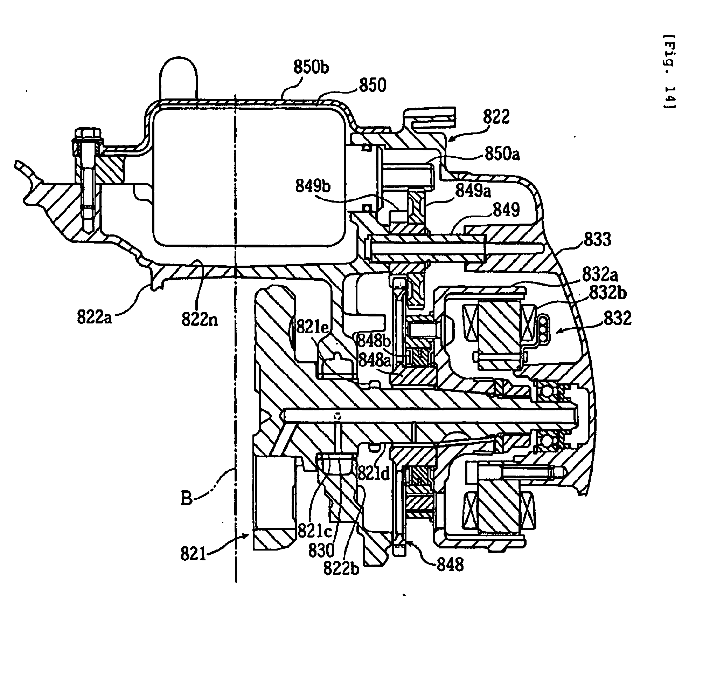

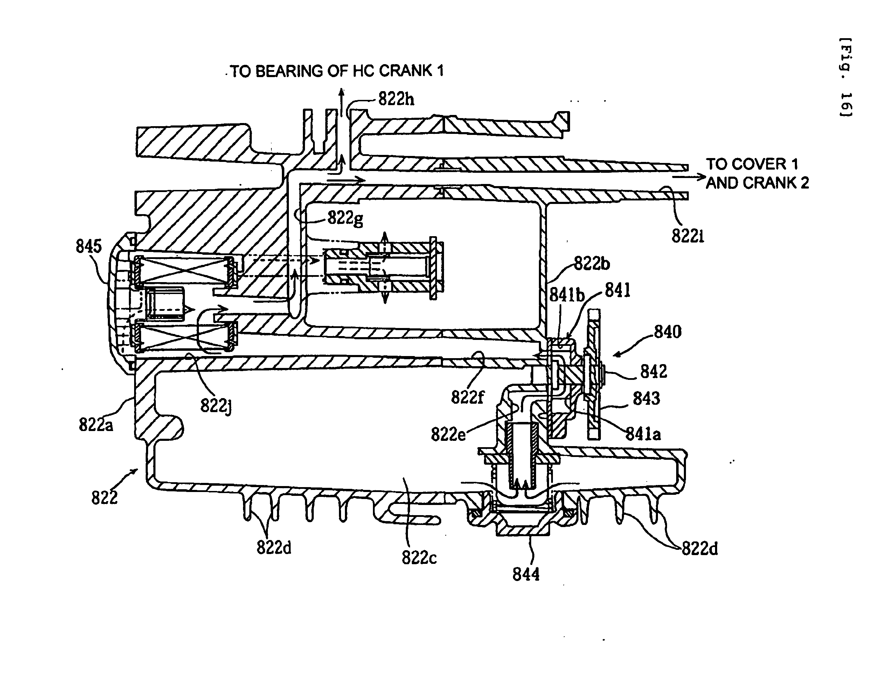

Subsequently, a power unit according to a second embodiment which illustrates the subject matter of the invention and a straddle-type vehicle provided with the power unit will be described with reference to Figs. 9 to 16. The embodiment will be described with a power unit mounted on a scooter type motorcycle. In addition, front and rear, and left and right referred to in the embodiment mean front and rear, and left and right as viewed in case of being seated on a seat. Also, a vertical direction referred to in the embodiment means a direction perpendicular to a road surface.

In the drawings, the reference numeral 801 denotes a scooter type motorcycle, which has the following, schematic construction. A front fork 805 is journaled by a head pipe of an underbone type vehicle body frame (not shown), and a front wheel 806 and a steering handle 807, respectively, are arranged on a lower end and an upper end of the front fork 805. Also, a saddle-ride type seat 808 for double ride is mounted centrally of the vehicle body frame, a unit swing type power unit 810 is mounted below a seat 808 of the vehicle body frame to be able to swing vertically, and a rear wheel 811 is arranged at a rear end of the power unit 810.

A periphery of the front fork 805 is covered by a front cover 809a and a periphery below the seat 808 is covered by a side cover 809b. Left and right step boards 809c, 809c are arranged between the front cover 809a and the side cover 809b.

The power unit 810 is constructed such that a transmission case 818, in which a V-belt type continuously variable transmission mechanism 817 having a V-belt 816, which is made of rubber or a resin, trained around a drive side sheave 814 and a driven side sheave 815 is accommodated, and an engine body 820 having a cylinder body, in which an angle formed between an extension A' of a straight line A connecting between a driven shaft 815a of the driven side sheave 815 and a drive shaft 814a of the drive side sheave 814 and a cylinder axis B is 45 degrees or less, about 10 degrees in the embodiment, are joined integrally. The transmission case 818 is arranged on the left of the engine body 820.

The engine body 820 is a water cooled type 4-cycle single cylinder constructed such that a cylinder block 823, in which a piston 826 is slidably accommodated, is joined to a front mating surface of a crankcase 822, in which a crankshaft 821 is accommodated, a cylinder head 824, in which an ignition plug 828, intake and exhaust valves, and a cam shaft (not shown) for drivingly opening and closing the respective valves are arranged, is joined, and a head cover 825 is mounted to the cylinder head 824.

A pair of left and right pivots 822m, 822m are formed on the crankcase 822 to project forward. The left and right pivots 822m are supported on an engine suspension 813 of the vehicle body frame through a link member 813a to be able to swing vertically about a pivot axis P1 in parallel to a crank axis P.

The left and right pivots 822m are formed on a front wall of an oil reservoir 822c, described later, of the crankcase 822 to extend substantially in parallel to a cylinder axis B. Also, the left and right pivots 822m are positioned below an underside of the cylinder block 823 and forwardly downwardly of the crankshaft 821 as viewed in a direction along the crankshaft.

An intake pipe 827 communicated to an intake port is connected to an upper wall 824a of the cylinder head 824, the intake pipe 827 being curved and extended toward the rear of the vehicle from the upper wall 824a. A fuel injection valve 827a is mounted on a downstream side of the intake pipe 827 and a throttle valve 827b is provided on an upstream side thereof. An air cleaner (not shown) is connected to an upstream end of the intake pipe 827.

The crankshaft 821 is arranged so that its crank axis P is directed horizontal in a vehicle width direction, and the piston 826 is connected to the crankshaft 821 through a connecting rod 829.

Left and right journals 821b, 821c of the crankshaft 821 are supported on left and right side walls 822a, 822b of the crankcase 822 with bearings 830, 830 therebetween. A sealing member 831 is mounted between the left journal 821b and the left side wall 822a whereby the crankcase 822 filled with a lubricating oil and the transmission case 818, into which a travel wind is conducted, are compartmented from each other.

Formed integrally on the right journal 821c of the crankshaft 821 is a right drive shaft 821d projecting from the right side wall 822b.

A generator 832 is mounted to an outer end of the right drive shaft 821d, the generator 832 being covered by a cover 833 mounted to the right side wall 822b. The generator 832 comprises a rotor 832a fitted taperingly onto the crankshaft 821, and a stator 832b fixed to the cover 833 to face the rotor 832a.

The left drive shaft 814a is formed integral with the left journal 821b of the crankshaft 821 to project into the transmission case 818 from the left side wall 822a. The drive side sheave 814 is mounted to the drive shaft 814a. Here, a sheave drive shaft may be provided separately from the crankshaft and the sheave drive shaft may be arranged coaxial with the crankshaft.

A primary balancer 835 is arranged in parallel to the crankshaft 821 in the crankcase 822 to suppress vibrations caused by a primary inertial force. The primary balancer 835 is arranged above a virtual plane F including the crank axis P of the crankshaft 821.

A balancer weight 835a is formed on the primary balancer 835 to extend in a manner to be positioned between left and right crank arms 821a of the crankshaft 821.

The balancer 835 is supported on the left and right side walls 822a, 822b with bearings 836, 836 therebetween, and a balancer gear 835b is mounted to a right end of the balancer 835 through a damper member 835c.

A drive gear 837 is mounted inside the right journal 821c of the crankshaft 821 to mesh with the balancer gear 835b.

A timing chain drive gear 821e is formed internally on an outside of the right journal 821c. The drive gear 821e is connected to a cam shaft (not shown) through a timing chain 838.

A cooling water pump shaft 839a is connected to the balancer 835 to be coaxial therewith. The pump shaft 839a rotationally drives a cooling water pump 839 arranged on an outer wall of the cover 833. A cooling water pressurized by the cooling water pump 839 is supplied to respective cooling jackets (not shown) of the engine body 820.

The oil reservoir 822c is formed on a bottom of the crankcase 822. The oil reservoir 822c is bulged and formed in a manner to project downward from a lower edge of the transmission case 818 and to incline forwardly downward so that it is lowered toward the front. Also, a plurality of cooling fins 822d are formed on an outer bottom surface of the oil reservoir 822c.

Arranged on the oil reservoir 822c is an oil pump 840, which supplies a lubricating oil to the crankshaft 821, respective lubricated portions, such as bearing portions, sliding portions, etc., of the cam shaft. The oil pump 840 comprises a housing 841 including a suction port 841a and a discharge port 841b, which are arranged outside the right side wall 822b of the crankcase 822, a pump shaft 842 journaled by the housing 841 and the right side wall 822b, and a pump gear 843 fixed to an outer end of the pump shaft 842.

An intermediate shaft 846 is born between the pump shaft 842 on the right side wall 822b and the crankshaft 821. A small gear 846a is fixed to an outer end of the intermediate shaft 846 to mesh with the pump gear 843 and a large gear 846b is fixed to an inner end thereof to mesh with the drive gear 837.

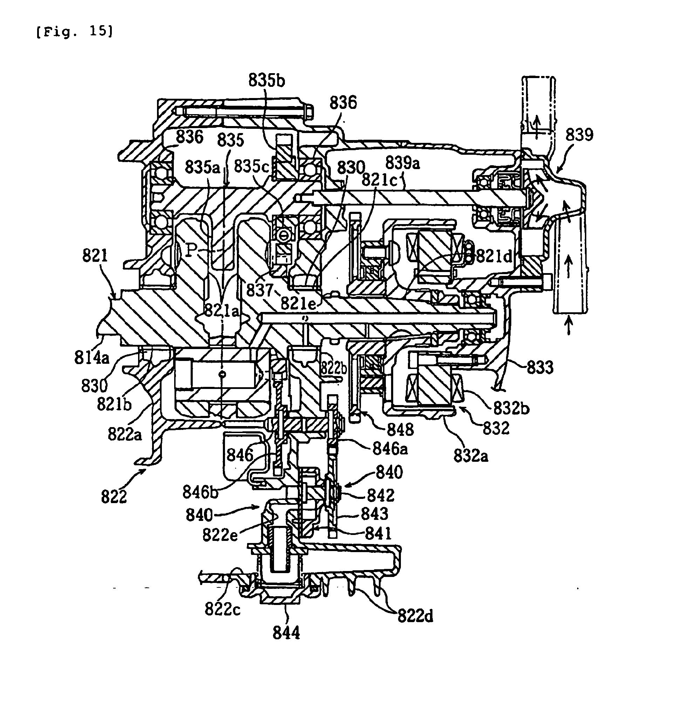

The drive gear 837 is a drive member common to the balancer 835 and the oil pump 840 and arranged in the crankcase 822 rightwardly of the crankshaft 821 relative to the cylinder axis B in a direction along the crankshaft (see Fig. 15).

A suction passage 822e is formed on the right side wall 822b to be communicated to the suction port 841a, the suction passage 822e being opened close to a bottom surface of the oil reservoir 822c. In addition, the reference numeral 844 denotes a drain plug.

A discharge passage 822f is formed on the right side wall 822b to be communicated to the discharge port 841b, the discharge passage 822f being communicated to an oil filter 845. A lubricating oil pressurized by the oil pump 840 and filtered by the oil filter 845 branches into a crankshaft path 822h and a cam shaft path 822i from a supply passage 822g to be supplied to the respective lubricated portions, and then drops naturally to return to the oil reservoir 822c.

The oil filter 845 is mounted detachably in a recess 822j provided concavely on that portion of the left side wall 822a, which faces the oil reservoir 822c, from outside the vehicle.

The oil filter 845 and the oil pump 840 are distributed and arranged on the left and on the right with the cylinder axis B therebetween as viewed in plan view and arranged on substantially the same axis as viewed along the crankshaft.

A starter gear (starting drive member) 848 is mounted rotatably to the right drive shaft 821d of the crankshaft 821 between the generator 832 and the drive gear 821e. The rotor 832a of the generator 832 is fixed to a boss 848a of the starter gear 848 with a one-way clutch 848b therebetween.

A drive gear 850a of a starter motor 850 is connected to the starter gear 848 through an idler shaft 849. The idler shaft 849 is supported bridging the right side wall 822b and the cover 833 to comprise a large idler gear 849a, which meshes with the drive gear 850a, and a small idler gear 849b, which meshes with the starter gear 848.

Rotation of the starter motor 850 is transmitted to the starter gear 848 through the idler shaft 849 and to the crankshaft 821 through the rotor 832a from the starter gear 848.

The starter motor 850 is arranged between the crankshaft 821 and the outer edge of the rear wheel 811 at a lower portion of a back surface of the crankcase 822 with a motor axis thereof in parallel to the crankshaft 821. More specifically, the starter motor 850 is arranged in an accommodating recess 822n provided concavely on a back wall of the oil reservoir 822c of the crankcase 822 and covered by a motor cover 850b.

The transmission case 818 comprises a case body 818a formed internal with and contiguous to the left side wall 822a of the crankcase 822 to extend to the rear wheel 811, and a case cover 819 mounted detachably to a left mating surface of the case body 818a.

A cooling wind introducing cover (not shown) is mounted to an outside of the case cover 819 to introduce a travel wind into the transmission case.

The drive side sheave 814 comprises a collar member 853 spline-fitted so as to rotate together with the drive shaft 814a, a moving sheave 854 mounted to the collar member 853 to be able to move axially and to rotate together with the collar member 853, and a stationary sheave 856 mounted to the drive shaft 814a so as to abut against the left end surface of the collar member 853 and fixed by a lock nut 855 so as to be unable to move axially.

The driven side sheave 815 comprises a stationary sheave 857 mounted to the driven shaft 815a, which is journaled bridging the case body 818a and the case cover 819, to be able to rotate but to be unable to move axially, a moving sheave 858 mounted to the stationary sheave 857 to be able to move axially and to rotate together with the stationary sheave 857, and a centrifugal clutch 859 interposed between the stationary sheave 857 and the driven shaft 815a. The centrifugal clutch 859 transmits rotation of the driven side sheave 815 to the driven shaft 815a when the driven side sheave 815 is increased in rotational speed. Rotation of the driven shaft 815a is transmitted to the rear wheel 811 mounted to the drive shaft 861 through a main shaft 860 and a drive shaft 861, which are arranged in parallel to the driven shaft 815a.

The continuously variable transmission mechanism 817 comprises a wound diameter varying mechanism 864 that varies a belt wound diameter of the drive side sheave 814 on basis of engine speed, vehicle speed, etc., the wound diameter varying mechanism 864 being arranged in a wound diameter control chamber 864a, which is formed on a front end of the drive side sheave 814 to bulge obliquely upward.

The wound diameter varying mechanism 864 is constructed to transmit rotation of an ECVT motor 865 to a reciprocating gear (drive member) 866, which serves as a gear train and a drive member, to convert the same into axial movement of the moving sheave 854 of the drive side sheave 814, thereby automatically controlling a belt wound diameter of the drive side sheave 814 between a Low position and a Top position. Rotation of the ECVT motor 865 is controlled by a controller (not shown) on the basis of engine speed, vehicle speed, etc.

The wound diameter varying mechanism 864 comprises the ECVT motor 865, a rotation transmitting gear 867, which transmits rotation of the ECVT motor 865 to the reciprocating gear 866, and an axial movement conversion part 868, which converts rotation of the reciprocating gear 866 into axial movement of the moving sheave 854.

The ECVT motor 865 is arranged on a front portion of an upper surface of the crankcase 822 with a motor axis directed in parallel to the crankshaft 821. More specifically, the ECVT motor 865 is mounted and fixed to an extension 822a' of the left side wall 822a, which forms the wound diameter control chamber 864a, from inside in the vehicle width direction. A rotating gear 865a of the ECVT motor 865 extends through the extension 822a' to project into the wound diameter control chamber 864a.

As viewed from laterally of a vehicle, the ECVT motor 865 is covered by the extension 822a' and arranged between an upper surface of the crankcase 822 and the intake pipe 827.

The rotation transmitting gear 867 comprises the reciprocating gear 866, a motor side gear 869, which meshes with the reciprocating gear 866, and a reduction gear 870, which reduces rotation of the ECVT motor 865 in speed to transmit the same to the motor side gear 869, and the rotating gear 865a of the ECVT motor 865 meshes with the reduction gear 870. Here, the reference numeral 871 denotes a rotation frequency sensor, and a state of rotation of the ECVT motor 865, hence, an axially moved position of the drive side sheave 814 is detected by the rotation frequency sensor 871.

The motor side gear 869 and the reduction gear 870, respectively, are supported on the extension 822a' of the left side wall 822a and an extension 819a of the case cover 819 with bearings 879, 880 therebetween.

The axial movement conversion part 868 comprises a slide cylindrical body 872 mounted to the moving sheave 854, a moving side feed screw member 874 supported rotatably on the slide cylindrical body 872 with a bearing 873 therebetween and having the reciprocating gear 866 fixed thereto, and a stationary side feed screw member 875, which meshes with the moving side feed screw member 874 and is latched on and fixed to the left side wall 822a.

The stationary side feed screw member 875 is supported on a stationary side support member 876 bolted and fixed to the left side wall 822a. A centering bearing 877 is interposed between the stationary side support member 876 and a bearing support member 878 fixed to the drive shaft 814a.

When engine speed is increased keeping with an opening operation of an accelerator pedal, rotation of the ECVT motor 865 is controlled so that a belt wound diameter beforehand set according to the engine speed is reached. Rotation of a rotating gear 856a of the ECVT motor 865 is transmitted to the reciprocating gear 866 from the reduction gear 870 and the motor side gear 869. When the reciprocating gear 866 rotates, the moving side feed screw member 874 together with the reciprocating gear 866 is moved axially by a distance corresponding to rotation of the ECVT motor 865. In keeping with this, the moving sheave 854 is moved a predetermined amount toward the Top and the drive side sheave 814 reaches the belt wound diameter as set.

The power unit 810 is constructed so that a center line of the rear wheel 811 in the vehicle width direction agrees with the cylinder axis B and agrees with a center line of the vehicle body frame 801.

The cylinder block 823, the cylinder head 824, and the head cover 825 of the power unit 810 are arranged offset so that a virtual plane B' including the cylinder axis B and being in parallel to the crankshaft 821 passes through a position downwardly offset t, specifically, 5 to 7 mm from the crank axis P as viewed along the crank shaft.

As viewed in a direction perpendicular to the crank axis P and the cylinder axis B, that is, as viewed in plan view, the reciprocating gear (drive member) 866, which varies a belt wound diameter of the drive shaft 814a, and the starter gear (starting drive member) 848, which rotationally drives the crankshaft 821, are arranged and distributed on the left and on the right with the cylinder axis B therebetween. More specifically, the reciprocating gear 866 is arranged on the left of the cylinder axis B in the direction along the crankshaft, and the starter gear 848 is arranged on the right of the cylinder axis B in the direction along the crankshaft. Also, a distance to the reciprocating gear 866 and a distance to the starter gear 848 from the cylinder axis B are set to be substantially the same.

Also, as viewed in a direction perpendicular to the both axes, both the ECVT motor 865 and the starter motor 850 are arranged so that centers of the respective motors in a longitudinal direction are positioned on the cylinder axis B.

Also, the ECVT motor 865 and the starter motor 850 are distributed and arranged on the front and on the rear with the crank axis P therebetween as viewed in a direction perpendicular to the crank axis P and the cylinder axis B. The ECVT motor 865 and the starter motor 850 are arranged substantially the same distance from the crank axis P.

Further, as viewed from laterally of a vehicle in the direction along the crankshaft, the ECVT motor 865 and the starter motor 850, respectively, are arranged and distributed above and below the crankshaft 821.

Furthermore, as viewed in the direction along the crankshaft, the ECVT motor 865 and the starter motor 850, respectively, are arranged on the front and on the rear with a virtual plane C, which includes the crank axis P and is perpendicular to the cylinder axis B, therebetween and arranged above and below a virtual plane D, which includes both the crank axis P and the axis of swinging P1 of the pivot shaft 813a of the power unit 810. The ECVT motor 865 and the starter motor 850 are arranged to be symmetric with respect to the virtual plane D.

Since according to the embodiment, as viewed in a direction perpendicular to the crank axis P and the cylinder axis B, the reciprocating gear 866, which varies a belt wound diameter of the drive side sheave 814, and the starter gear 848, which rotationally drives the crankshaft 821, are arranged on the left and on the right of the cylinder axis B in the direction along the crankshaft, and the ECVT motor 865 and the starter motor 850 are arranged so that axial centers of the respective motors 865, 850 are arranged to be positioned on the cylinder axis B, the reciprocating gear 866 and the starter gear 848 are arranged and distributed on the left and on the right in the direction along the crankshaft and the respective motors 865, 850 are positioned on the cylinder axis B between the reciprocating gear 866 and the starter gear 848. Thereby, as compared with the case where both conventional drive members are arranged together on one side of a crank chamber, the whole power unit can be decreased in vehicle width dimension and the power unit 810 can be made favorable in left and right weight balance.

Since as viewed in plan view, the ECVT motor 865 and the starter motor 850 are arranged on the front and on the rear with the crankshaft 821 therebetween, the power unit 810 can be made favorable on the front and on the rear in weight balance.

Also, since as viewed in the direction along the crankshaft, the ECVT motor 865 and the starter motor 850 are arranged on the front and on the rear with the virtual plane C, which is perpendicular to the cylinder axis B, therebetween, weight balance can be made favorable on the front and on the rear with the crankshaft 821 centered.

According to the embodiment, since as viewed in the direction along the crankshaft, the ECVT motor 865 and the starter motor 850 are arranged above and below the virtual plane D, which includes both the crank axis and the axis of swinging of the power unit 810, weight balance can be made favorable above and below with the pivot shaft 813a centered.

According to the embodiment, since the primary balancer 835 and the drive gear 837, which drives the oil pump 840, are arranged in the crankcase 822 on the right of the cylinder axis B in the direction along the crankshaft, weight balance on the left and on the right can be made favorable with respect to the reciprocating gear 866 and the drive side sheave 814, which are arranged on the left of the crankshaft 821.

Also, since the primary balancer 835 and the oil pump 840 are driven by the common drive gear 837, it is possible to reduce the number of parts and to suppress an increase in weight.

According to the embodiment, since the power unit 810 is mounted on a vehicle body frame of a scooter type motorcycle and a center line of the power unit 810 and a center line of the vehicle body frame are caused to agree with each other, weight balance in a whole vehicle can be made favorable and stability in operation can be heightened.

In addition, while the embodiment has been described with respect to the case where the ECVT motor 865 of the wound diameter varying mechanism 864 and the starter motor 850 of the starter gear 848 are provided, both the wound diameter varying mechanism and the starter gear can be driven by a single common electric motor in the invention. In this case, it suffices that, for example, a rotating shaft of the electric motor be caused to project on the left and on the right of the crankshaft, the wound diameter varying mechanism be driven by a left projecting portion of the rotating shaft, and the starter gear be driven by the right projecting portion.

Also, while according to the embodiment, the ECVT motor and the starter motor are arranged horizontally in parallel to the crankshaft, at least one of the motors may be arranged vertically with a motor shaft thereof directed forwardly of the vehicle in the invention.

Furthermore, while according to the embodiment, the drive side sheave is mounted to an end of the crankshaft, the drive side sheave may be mounted to the primary shaft, which is formed separately of the crankshaft.

Also, while the embodiment has been described taking an example of the power unit, in which the cylinder body is arranged with the cylinder axis B substantially horizontal, the invention is applicable to the case where an angle formed by the cylinder axis B is 10 to 45 degrees, or more than 45 degrees.

Furthermore, while the embodiment has been described taking an example of the power unit of a scooter type motorcycle, the power unit of the invention is not limited to a scooter type one but can be applied to other motorcycles. Also, "motorcycle" in the specification of the present application means a motorcycle, includes a motorcycle and a scooter, and specifically means a vehicle capable of turning with a vehicle body inclined. Accordingly, even one, in which at least one of a front wheel and a rear wheel comprises two or more wheels and which is a tricycle, a four-wheel car (or more) in terms of the number of tires, can be included in "motorcycle" in the specification of the present application. Furthermore, the invention is not limited to a motorcycle but can be applied to other vehicles, which can make use of the effect of the invention, and can be applied to so-called straddle-type vehicles, which include four-wheel buggies (All Terrain Vehicle) and snowmobiles except motorcycles.

According to the embodiment it is provided a unit swing-type power unit, in which a transmission casing accommodating therein a V-belt type continuously variable transmission mechanism, and an engine body are joined integrally, and which is supported to be able to swing about an axis in parallel to a crank axis of a crankshaft of the engine, wherein said power unit comprises:
a sheave drive member arranged on the crankshaft to vary a wound diameter of a drive side sheave of the transmission mechanism,
a starting drive member arranged on the crankshaft to rotationally drive the crankshaft, and
at least one electric motor to drive the starting drive member and the sheave drive member,
wherein the electric motor is arranged on an axis of a cylinder of the engine,
and wherein, when viewed in plan view, the drive member is arranged on one side of the cylinder axis in a direction along the crankshaft, and the starting drive member is arranged on the respective other side of the cylinder axis in the direction along the crankshaft.

In the unit swing-type power unit according to an embodiment, in the case that exclusive electric motors are provided, an ECVT motor is provided, which drives the sheave drive member, and a starter motor is provided, which drives the starting drive member.

In the unit swing-type power unit according to an embodiment, when viewed in plan view, the ECVT motor and the starter motor, respectively, are arranged on one side and on the other side with the cylinder axis therebetween.

In the unit swing-type power unit according to an embodiment, when viewed in the direction along the crankshaft, the ECVT motor and the starter motor, respectively, are arranged on one side and on the other side with a virtual plane, which includes the crank axis and which is perpendicular to the cylinder axis, therebetween.

In the unit swing-type power unit according to an embodiment, when viewed in the direction along the crankshaft, the ECVT motor and the starter motor, respectively, are arranged on one side and on the other side with a virtual plane, which includes both the crank axis and an axis of swinging of the power unit.

The Unit swing-type power unit according to an embodiment comprising an oil pump, which supplies a lubricating oil to a lubricated portion, wherein an oil pump drive member for driving of the oil pump is arranged on the crankshaft on the other side of the cylinder axis in the direction along the crankshaft.

It is provided a straddle-type vehicle comprising a vehicle body frame and the power unit, according to one or more embodiments, in which the crankshaft is mounted on the vehicle body frame to be directed in a vehicle width direction.

## Claims

1. A power unit for a small vehicle, comprising:
an engine having an engine body (820);
the engine body (820) having a cylinder block (823);
a starter motor (850) for starting the engine;
a transmission casing (818) extending from a crankcase (822) of the engine body (820) to the rear of the vehicle;
a V-belt type continuously variable transmission (817) accommodated within a space formed by the transmission casing (818) and the crankcase (822) to transmit output from the engine to a rear wheel (811) positioned behind the engine body (820); and
a pivot member (822m) being positioned below an underside of the cylinder block (823) and connected to a vehicle frame via a pivot shaft penetrating through the pivot member (822m) in a vehicle width direction such that the pivot member (822m) can pivot, wherein
the V-belt type continuously variable transmission (817) includes a drive side sheave (814) which is provided on a drive shaft (814a) for receiving output from the engine and has a stationary sheave (856) and a moving sheave (854) between which a V-shaped groove for receiving a V-belt (816) is formed, a driven side sheave (815) which is provided on a driven shaft (815a) disposed in parallel with the drive shaft (814a) and extracting the output to the rear wheel (811) and has a stationary sheave (857) and a moving sheave (858) between which a V-shaped groove for receiving a the V-belt (816) is formed, the V-belt (816) is attached to the V-shaped grooves of the drive side sheave (814) and driven side sheave (815) such that the V-belt (816) is wound around the drive and driven side sheaves (814, 815) to transmit rotational power therebetween,
and a wound diameter varying mechanism (864) for controlling groove widths of the drive side sheave (814) and driven side sheave (815) by applying arbitrary shifting thrust to the moving sheave (854) of the drive side sheave (814) using an electric motor (865), **characterized in that**
the engine body (820) having the cylinder block (823), in which an angle formed between an extension (A') of a straight line (A) connecting between the driven shaft (815a) of a driven side sheave (815) and the drive shaft (814a) of the drive side sheave (814) and a cylinder axis (B) is 45 degrees or less, the electric motor (865) is arranged on a front portion of an upper surface of the crankcase (822),
the starter motor (850) for starting the engine is arranged at a lower portion of a back surface of the crankcase (822).

2. A power unit for a small vehicle according to claim 1, **characterized in that** the pivot member (822m) is formed on the crankcase (822) to project forward.

3. A power unit for a small vehicle according to claim 1 or 2, **characterized in that** the electric motor (865) and the starter motor (850) are arranged substantially the same distance from a crank axis (P) of said engine.

4. A power unit for a small vehicle according to claim 3, **characterized in that** the electric motor (865) and the starter motor (850) are arranged on the front and on the rear with a virtual plane (C), which includes the crank axis (P) and is perpendicular to the cylinder axis (B).

5. A power unit for a small vehicle according to claim 3 or 4, **characterized in that** the electric motor (865) and the starter motor (850) are arranged above and below a virtual plane (D), which includes both the crank axis (P) and an axis of swinging (P1) of the pivot shaft.

## Patentansprüche

1. Antriebseinheit für ein kleines Fahrzeug, aufweisend:
einen Motor mit einem Motorkörper (820);
wobei der Motorkörper (820) einen Zylinderblock (823) hat;
einen Startermotor (850) zum Starten des Motors;
ein Getriebegehäuse (818), das sich von einem Kurbelgehäuse (822) des Motorkörpers (820) nach hinten des Fahrzeuges erstreckt;
ein stufenlos veränderbares Getriebe (817) vom Keilriemen- Typ, untergebracht innerhalb des Raumes, gebildet durch das Getriebegehäuse (818) und das Kurbelgehäuse (822), um eine Ausgangsleistung von der Brennkraftmaschine auf ein Hinterrad (811), positioniert hinter dem Motorkörper (820), zu übertragen; und
ein Schwenkteil (822m), das unter einer Unterseite des Zylinderblocks (823) positioniert und mit einem Fahrzeugrahmen über eine Schwenkwelle verbunden ist,
die das Schwenkteil (822m) in einer Richtung der Fahrzeugbreite derart durchdringt, dass das Schwenkteil (822m) schwenken kann, wobei das stufenlos veränderbare Getriebe (817) vom Keilriemen- Typ eine antriebsseitige Scheibe (814) enthält, die auf einer Antriebswelle (814a) zum Aufnehmen einer Ausgangsleistung von dem Motor vorgesehen ist und eine stationäre Scheibe (856) hat, und eine sich bewegende Scheibe (854), zwischen denen eine keilförmige Nut zum Aufnehmen eines Keilriemens (816) gebildet ist, eine abtriebsseitige Scheibe (815), die auf einer angetriebenen Welle (815a) vorgesehen ist, angeordnet parallel mit der Antriebswelle (814a) und die die Ausgangsleistung auf das Hinterrad (811) überträgt, und eine stationäre Scheibe (857) und eine sich bewegende Scheibe (858) hat, zwischen denen eine keilförmige Nut zum Aufnehmen eines Keilriemens (816) gebildet ist, wobei der Keilriemen (816) mit den keilförmigen Nuten der antriebsseitigen Scheibe (814) und der abtriebsseitigen Scheibe (815) derart verbunden ist, dass der Keilriemen (816) um die antriebsseitige Scheibe und die abtriebsseitigen Scheibe (814, 815) geschlungen ist, um eine Rotationsleistung dazwischen zu übertragen, und eine Umschlingungsdurchmesser- Variierungsvorrichtung (864) zum Steuern der Nutbreiten der antriebsseitigen Scheibe (814) und der abtriebsseitigen Scheibe (815) durch Aufbringen eines willkürlichen Schaltdruckes auf die sich bewegende Scheibe (854) der antriebsseitigen Scheibe (814) unter Verwendung eines elektrischen Motors (865),
**dadurch gekennzeichnet, dass**
der Motorkörper (820) den Zylinderblock (823) hat, in dem ein Winkel, gebildet zwischen einer Verlängerung (A') einer geraden Linie (A), die zwischen der angetriebenen Welle (815a) einer abtriebsseitigen Scheibe (815) und der Antriebswelle (814a) der antriebsseitigen Scheibe (814) verbindet, und einer Zylinderachse (B) 45 Grad oder weniger beträgt, wobei der elektrische Motor an einem vorderen Abschnitt einer Oberseite des Kurbelgehäuses (822) angeordnet ist, wobei der Startermotor (850) zum Starten des Motors an einem unteren Abschnitt einer hinteren Oberfläche des Kurbelgehäuses (822) angeordnet ist.

2. Antriebseinheit für ein kleines Fahrzeug nach Anspruch 1, **dadurch gekennzeichnet, dass** das Schwenkteil (822m) an dem Kurbelgehäuse (822) gebildet ist, um nach vorn vorzuspringen.

3. Antriebseinheit für ein kleines Fahrzeug nach Anspruch 1 oder 2, **dadurch gekennzeichnet, dass** der elektrische Motor (865) und der Startermotor (850) im Wesentlichen in demselben Abstand von einer Kurbelachse (P) der Brennkraftmaschine angeordnet sind.

4. Antriebseinheit für ein kleines Fahrzeug nach Anspruch 3, **dadurch gekennzeichnet, dass** der elektrische Motor (865) und der Startermotor (850) vorn und hinten bei einer virtuellen Ebene (C) angeordnet sind, die die Kurbelachse (P) enthält und rechtwinklig zu der Zylinderachse (B) ist.

5. Antriebseinheit für ein kleines Fahrzeug nach Anspruch 3 oder 4, **dadurch gekennzeichnet, dass** der elektrische Motor (865) und der Startermotor (850) oberhalb und unter einer virtuellen Ebene (D) angeordnet sind, die sowohl die Kurbelachse (P), als auch eine Schwingachse (P1) der Schwenkwelle enthält.

## Revendications

1. Groupe moteur pour un petit véhicule, comportant :
un moteur possédant un corps de moteur (820) ;
le corps de moteur (820) possédant un bloc-cylindres (823) ;
un démarreur (850) pour démarrer le moteur ;
un carter de boîte de vitesses (818) se prolongeant à partir d'un carter de moteur (822) du corps de moteur (820) vers l'arrière du véhicule ;
une transmission à variation continue à courroie trapézoïdale (817), placée dans un espace formé par le carter de boîte de vitesses (818) et le carter de moteur (822) pour transmettre la sortie du moteur à une roue motrice (811) positionnée derrière le corps de moteur (820) ; et
un organe pivot (822m) positionné au-dessous d'une surface inférieure du bloc-cylindres (823), et relié à un châssis de véhicule via un axe de pivot pénétrant au travers de l'organe pivot (822m), selon une direction latérale du véhicule, de sorte que l'organe pivot (822m) puisse pivoter, dans lequel
la transmission à variation continue à courroie trapézoïdale (817) comporte une poulie motrice (814),
placée sur un arbre moteur (814a), pour recevoir la sortie du moteur, et possède une joue fixe (856) et une joue mobile (854) entre lesquelles est formée une gorge trapézoïdale destinée à recevoir une courroie trapézoïdale (816), une poulie entraînée (815), placée sur un arbre entraîné (815a) disposé parallèlement à l'arbre moteur (814a) et extrayant la sortie pour l'appliquer à la roue arrière (811) et possède une joue fixe (857) et une joue mobile (858) entre lesquelles est formée une gorge trapézoïdale pour recevoir une
courroie trapézoïdale (816), la courroie trapézoïdale (816) est reliée aux gorges trapézoïdales de la poulie motrice (814) et de la poulie entraînée (815) de sorte que la courroie trapézoïdale (816) s'enroule autour des poulies motrice et entraînée (814, 815) pour transmettre l'énergie de rotation entre elles, et un mécanisme de variation de diamètre d'enroulement (864) destiné à commander les largeurs de gorge de la poulie motrice (814) et de la poulie entraînée (815) en appliquant une poussée de déplacement arbitraire à la joue mobile (854) de la poulie motrice (814) en utilisant un moteur électrique (865) ; **caractérisé en ce que**
le corps de moteur (820) possédant le bloc-cylindres (823), dans lequel un angle constitué entre une extension (A') d'une ligne droite (A) reliant l'axe entraîné (815a) d'une poulie entraînée (815) et l'arbre moteur (814A) de la poulie motrice (814) et un axe de cylindre (B) est de 45 degrés, ou moins, the moteur électrique (865) est placé sur une partie avant d'une surface supérieure du carter de moteur (822),
le démarreur (850) destiné à démarrer le moteur est disposé dans une partie inférieure d'une surface arrière du carter de moteur (822).

2. Groupe moteur pour un petit véhicule, selon la revendication 1, **caractérisé en ce que** l'organe pivot (822m) est constitué sur le carter de moteur (822) pour se prolonger vers l'avant.

3. Groupe moteur pour un petit véhicule selon la revendication 1 ou 2, **caractérisé en ce que** le moteur électrique (865) et le démarreur (850) sont disposés sensiblement à la même distance par rapport à un vilebrequin (P) dudit moteur.

4. Groupe moteur pour un petit véhicule selon la revendication 3, **caractérisé en ce que** le moteur électrique (865) et le démarreur (850) sont disposés sur l'avant et sur l'arrière selon un plan virtuel (C), qui englobe le vilebrequin (P), et est perpendiculaire à l'axe de cylindre (B).

5. Groupe moteur pour un petit véhicule selon la revendication 3 ou 4, **caractérisé en ce que** le moteur électrique (865) et le démarreur (850) sont disposés au-dessus et au-dessous d'un plan virtuel (D), qui englobe à la fois le vilebrequin (P) et un axe d'oscillation (P1) de l'axe de pivot.
